# EUROPÄISCHE PATENTANMELDUNG

(11) **EP 2 966 622 A1**
(43) Veröffentlichungstag der Anmeldung: **13.01.2016**
(21) Anmeldenummer: 15175315.9
(22) Anmeldetag: 03.07.2015
(51) Int. Cl.: G07C 5/08, B62D 1/00, B62D 15/00, B60R 16/00, B60R 21/00

(54) **UNFALLDATENSPEICHERVORRICHTUNG UND LENKSÄULENMODUL**

(30) Priorität: 11.07.2014 DE 102014109726
(71) Anmelder: Valeo Schalter und Sensoren GmbH, 74321 Bietigheim-Bissingen (DE)
(72) Erfinder: Rath, Joachim, 74321 Bietigheim-Bissingen (DE)

(57) **Zusammenfassung**

Die Erfindung betrifft eine Unfalldatenspeichervorrichtung (20) für ein Fahrzeug, wobei die Unfalldatenspeichervorrichtung (20) zur Erfassung von Signalen und/oder zum Empfang von über eine Schnittstelle (23, 24) übermittelten Signalen ausgebildet ist und Mittel zur Speicherung (21, 22) der erfassten und/oder empfangenen Signale und Mittel zur Analyse der erfassten und/oder empfangenen Signale aufweist, um eine Unfallsituation zu detektieren, wobei die Unfalldatenspeichervorrichtung (20) zur Integration in ein Lenksäulenmodul (10) ausgebildet ist. Die Erfindung betrifft außerdem ein Lenksäulenmodul (10) für ein Fahrzeug, das eine Unfalldatenspeichervorrichtung (20) aufweist, insbesondere eine vorbeschriebene Unfalldatenspeichervorrichtung (20).

## Beschreibung

Die Erfindung betrifft eine Unfalldatenspeichervorrichtung für ein Fahrzeug, wobei die Unfalldatenspeichervorrichtung zur Erfassung von Signalen und/oder zum Empfang von über eine Schnittstelle übermittelten Signalen ausgebildet ist und Mittel zur Speicherung der erfassten und/oder empfangenen Signale und Mittel zur Analyse der erfassten und/oder empfangenen Signale aufweist, um eine Unfallsituation zu detektieren. Außerdem betrifft die Erfindung ein Lenksäulenmodul für ein Fahrzeug, insbesondere ein Lenksäulenmodul mit einer vorbeschriebenen Unfalldatenspeichervorrichtung.

Unfalldatenspeichervorrichtungen, die umgangssprachlich häufig als sogenannte "Black Box" oder EDR ("Event Data Recorder") bezeichnet werden und dazu ausgebildet sind, vor, während und nach einer Unfallsituation relevante Daten eines Fahrzeugs zu speichern, sind aus dem Stand der Technik grundsätzlich bekannt, beispielsweise aus der WO 94/18645. Sie dienen insbesondere dazu, genauere Erkenntnisse über die Unfallsituation zu erhalten. Dazu erfasst bzw. empfängt die Unfalldatenspeichervorrichtung permanent verschiedene, der im Fahrzeug verfügbaren Signale wie Geschwindigkeit, Längs- und Querbeschleunigung, Bremsbetätigung etc., analysiert diese Daten und speichert sie einige Zeit zwischen. Die erfassten bzw. empfangenen Daten werden dabei permanent daraufhin überprüft, ob eine Unfallsituation vorliegt oder nicht. Dazu werden in der Regel die aufgetretenen Beschleunigungen ausgewertet, wobei üblicherweise eine Unfallsituation detektiert wird, wenn ein definierter Beschleunigungsgrenzwert überschritten worden ist. Wird kein Unfall detektiert, werden die zwischengespeicherten Daten in der Regel nach einiger Zeit gelöscht und neue, nachfolgend erfasste bzw. empfangene Daten werden zwischengespeichert. Im Falle eines erkannten Unfalls hingegen bleiben die Daten eines definierten Zeitraums vor und nach der Unfallsituation dauerhaft gespeichert und werden nicht automatisch gelöscht. In der Regel sind die Unfalldatenspeichervorrichtungen als separate Steuergeräte in einem Fahrzeug integriert, was bedeutet, dass neben der separat zu entwickelnden Software jeweils auch eine separate Hardware sowie ein entsprechender Bauraum vorgehalten werden muss.

Es ist Aufgabe der Erfindung, eine alternative Unfalldatenspeichervorrichtung bereitzustellen, insbesondere eine Unfalldatenspeichervorrichtung, welche mit weniger Aufwand und damit kostengünstiger in ein Fahrzeug integriert werden kann und welche auf einfache Art und Weise eine verbesserte Rekonstruktion eines Unfallgeschehens ermöglicht.

Diese Aufgabe wird erfindungsgemäß durch eine Unfalldatenspeichervorrichtung und durch ein Lenksäulenmodul mit den Merkmalen gemäß den jeweiligen unabhängigen Patentansprüchen gelöst. Vorteilhafte Ausführungen der Erfindung sind Gegenstand der abhängigen Patentansprüche, der Beschreibung und der Zeichnungen.

Eine erfindungsgemäße Unfalldatenspeichervorrichtung ist dadurch gekennzeichnet, dass die Unfalldatenspeichervorrichtung zur Integration in ein Lenksäulenmodul ausgebildet ist. Dadurch kann die Unfalldatenspeichervorrichtung in das Lenksäulenmodulintegriert werden, d.h. in ein bereits bestehendes Steuergerät, so dass kein bzw. nur noch ein geringer Hardware-Umfang zusätzlich bereitgestellt werden muss. Insbesondere ist der vorzuhaltende Bauraum deutlich geringer, da die zusätzliche Integration entsprechender Komponenten wie beispielsweise von Speicherbausteinen etc. in ein Steuergerät deutlich weniger Bauraum fordert als ein separates Steuergerät, das Bauraum für das Gehäuse sowie die Anschlusskabel benötigt. Die Integration in das Lenksäulenmodul ist dabei besonders vorteilhaft, weil eine Vielzahl von Signalen, welche üblicherweise von einer Unfalldatenspeichervorrichtung erfasst und ausgewertet werden, wie beispielsweise der Lenkwinkel oder eine Lenkwinkelgesclhwindigkeit, im Lenksäulenmodul ohnehin zur Verfügung stehen. Lenksäulenmodule sind aus dem Stand der Technik grundsätzlich bekannt, beispielsweise aus der DE 103 13 815 A1.

In einer bevorzugten Ausgestaltung weist die Unfalldatenspeichervorrichtung zur Speicherung der erfassten und/oder empfangenen Signale wenigstens ein Hauptspeichermodul auf und besonders bevorzugt zusätzlich wenigstens einen Nebenspeichermodul.

Dabei ist das Hauptspeichermodul vorzugsweise zur Speicherung der Ergebnisse der Datenanalyse vorgesehen, d.h. zur Speicherung der bei der Analyse erhaltenen Ergebnisse bzw. zur Speicherung von Ergebnisdaten, wie beispielsweise von erkannten Ereignissen wie "Unfall" oder "heikles Fahrmanöver", und das Nebenspeichermodul zur Speicherung sonstiger Daten bzw. der "Rohdaten" wie beispielsweise Datum, Uhrzeit, Kilometerstand, Geschwindigkeit, Beschleunigungen etc. D.h. mit anderen Worten ist das Hauptspeichermodul vorzugsweise als Ereignisspeicher ausgebildet, in welchem erkannte Ereignisse, wie beispielsweise ein Unfall oder ein heikles bzw. kritisches Fahrmanöver, abgelegt werden können, und das Nebenspeichermodul eine Art Verlaufsspeicher, in welchem die "Rohdaten" bzw. die Basisdaten, welche eine Grundlage für die Analyse und Erkennung von Ereignissen bilden, abgelegt werden können.

Werden die Daten in zwei Speichern abgelegt, insbesondere wie vorbeschrieben unterteilt in "Rohdaten" und Ergebnisdaten, ist zum Einen eine nachträgliche Prüfung und Wiederholung der Analyse möglich und zum Anderen können die einzelnen Speichermodule und damit die unterschiedlich sensitiven Daten mit unterschiedlichen Zugriffsrechten versehen werden. Selbstverständlich ist es auch möglich, im Hauptspeichermodul Verlaufsdaten abzulegen, beispielsweise die Geschwindigkeit, Beschleunigungen oder die Gierrate, und/oder im Nebenspeichermodul Ergebnisdaten.

Bevorzugt ist das Hauptspeichermodul wenigstens zur Speicherung der letzten 5 erkannten Ereignisse ausgebildet, insbesondere zur Speicherung der letzten 10 erkannten Ereignisse. Das Nebenspeichermodul ist vorzugsweise zur Speicherung der Daten seit den letzten 5 Zündungswechseln ausgebildet, insbesondere zur Speicherung seit den letzten 10 Zündungswechseln.

Ist die Unfalldatenspeichervorrichtung in einem Lenksäulenmodul integriert, werden Haupt- und/oder Nebenspeichermodul vorzugsweise jeweils durch ein Speichermodul des Lenksäulenmoduls gebildet. Selbstverständlich können auch zusätzliche Speichermodule wie beispielsweise zusätzliche EEPROMs, Speicherkarten etc. im Lenksäulenmodul eingebracht werden.

In einer bevorzugten Ausgestaltung ist die Unfalldatenspeichervorrichtung zur Erfassung und/oder Speicherung und/oder Analyse von intern im Lenksäulenmodul erzeugten und/oder erfassten Signalen und/oder Funktionen ausgebildet, insbesondere zur Erfassung einer Hebelbetätigung von Wischer, Blinker, Tempomat, Shift-by-Wire etc., eines Lenkwinkels, einer Lenkwinkelgeschwindigkeit, einem Zustand der Lenkradheizung und/oder einer Betätigung eventuell vorhandener Lenkradtasten. Es versteht sich von selbst, dass neben den genannten Signalen sämtliche, im Lenksäulenmodul erzeugten und/oder erfassten Signale von der Unfalldatenspeichervorrichtung verwendet, d.h. gespeichert und analysiert werden können.

In einer vorteilhaften Ausgestaltung ist die Unfalldatenspeichervorrichtung, insbesondere zusätzlich, zur Erfassung und/oder Speicherung und/oder Analyse von extern außerhalb des Lenksäulenmodul erzeugten Signalen ausgebildet, wobei die Unfalldatenspeichervorrichtung dazu über eine Schnittstelle mit einem Fahrzeug-Bussystem koppelbar ist. Dadurch können auch Fahrzeugdaten verwendet werden, welche nicht unmittelbar im Lenksäulenmodul erzeugt und/oder erfasst werden, welche aber auf dem Fahrzeug-Bus zur Verfügung stehen. Dazu weist die Unfalldatenspeichervorrichtung vorzugsweise eine entsprechende Schnittstelle auf, beispielsweise eine CAN- oder FlexRay-Schnittstelle oder ist über eine geeignete Schnittstelle mit einem Lenksäulenmodul koppelbar, welches eine entsprechende CAN- oder FlexRay-Schnittstelle zur Kopplung mit dem Fahrzeug-Bussystem aufweist.

In einer bevorzugten Ausgestaltung ist die Unfalldatenspeichervorrichtung, insbesondere zusätzlich, über eine Diagnoseschnittstelle mit einem Diagnosegerät koppelbar, wobei die Unfalldatenspeichervorrichtung dazu vorzugsweise eine entsprechende Diagnoseschnittstelle aufweist, insbesondere eine OBD-, CAN-, FlexRay-, RS32-, LIN- oder USB-Schnittstelle oder die Unfalldatenspeichervorrichtung ist über eine geeignete Schnittstelle mit einem Lenksäulenmodul koppelbar, welches eine entsprechende Diagnoseschnittstelle aufweist.

In einer besonders vorteilhaften Ausgestaltung weist die Unfalldatenspeichervorrichtung einen von einem Fahrer manuell betätigbaren Schalter auf, mit welchem in einem funktionsgemäßen Einbauzustand der Unfalldatenspeichervorrichtung in einem Fahrzeug eine Dauerspeicherung auslösbar ist. Dadurch können Ereignisse dauerhaft bzw. bis zu einem nächsten Auslesen der in der Unfalldatenspeichervorrichtung gespeicherten Daten gespeichert werden, auch wenn kein Ereignis erkannt worden ist und somit eine automatische Dauerspeicherung nicht ausgelöst worden ist.

In einer weiteren, alternativen oder zusätzlichen Ausgestaltung weist die Unfalldatenspeichervorrichtung Mittel auf, um den Fahrer über einen Zustand der Unfalldatenspeichervorrichtung zu informieren, insbesondere um den Fahrer darauf hinzuweisen, dass eine Speicherkapazität ausgeschöpft ist, um den Fahrer aufzufordern, die als Daten gespeicherten Signale auszulesen und/oder die Speicherkapazität durch Löschen der gespeicherten Daten wieder freizugeben.

Dazu weist die Unfalldatenspeichervorrichtung vorzugsweise eine Anzeigeeinrichtung auf oder ist mit einer Anzeigeeinrichtung koppelbar, beispielsweise mit einer Instrumententafel eines Fahrzeugs. Auf diese Weise kann dem Fahrer beispielsweise angezeigt werden, dass die Unfalldatenspeichervorrichtung aktiviert oder deaktiviert ist, dass die Speicherkapazität bald erschöpft ist bzw. zu wie viel Prozent die Speicherkapazität erschöpft ist oder dass die Speicherkapazität bereits erschöpft ist, und die Daten ausgelesen werden sollten.

In einer weiteren, alternativen oder zusätzlichen Ausgestaltung weist die Unfalldatenspeichervorrichtung einen von einem Fahrer manuell betätigbaren Schalter auf, mit welchem die in der Unfalldatenspeichervorrichtung gespeicherten Daten gelöscht werden können, vorzugsweise vollständig. Dies kann insbesondere nach einem Unfall vorteilhaft sein, da der Fahrer so eine Selbstbelastung vermeiden kann. Selbstverständlich ist es denkbar, diese Funktionalität zu sperren bzw. mit bestimmten Zugriffsrechten zu schützen, beispielsweise in Firmenfahrzeugen oder dergleichen, um eine Löschung durch einen nicht berechtigten Fahrer auszuschließen und entsprechende Fahrer auf diese Weise zu einer angemessenen Fahrweise anzuhalten.

Ein erfindungsgemäßes Lenksäulenmodul weist eine Unfalldatenspeichervorrichtung auf, insbesondere eine vorbeschriebene, erfindungsgemäße Unfalldatenspeichervorrichtung.

Bevorzugt weist das Lenksäulenmodul Mittel zur Erfassung und/oder Speicherung von Signalen auf und diese dienen besonders bevorzugt auch zur Speicherung der erfassten und/oder empfangenen Signale der Unfalldatenspeichervorrichtung, wobei das Lenksäulenmodul dazu vorzugsweise wenigstens ein Hauptspeichermodul aufweist und insbesondere wenigstens ein Hauptspeichermodul und zusätzlich wenigstens ein Nebenspeichermodul.

Dabei ist das Hauptspeichermodul vorzugsweise, wie oben im Zusammenhang mit der Unfalldatenspeichervorrichtung beschrieben, zur Speicherung von Ergebnisdaten ausgebildet und das Nebenspeichermodul vorzugsweise zur Speicherung von Verlaufsdaten.

Bevorzugt weist das Lenksäulenmodul eine Schnittstelle zu einem Fahrzeug-Bussystem auf, wobei die Unfalldatenspeichervorrichtung vorzugsweise ebenfalls über diese Schnittstelle mit dem Fahrzeug-Bussystem koppelbar ist.

In einer vorteilhaften Ausgestaltung weist das Lenksäulenmodul, insbesondere zusätzlich, eine Diagnoseschnittstelle auf, über welche das Lenksäulenmodul mit einem Diagnosegerät koppelbar ist, wobei die Unfalldatenspeichervorrichtung vorzugsweise ebenfalls über diese Diagnoseschnittstelle mit einem Diagnosegerät koppelbar ist.

Bevorzugt weist das Lenksäulenmodul ferner einen von einem Fahrer manuell betätigbaren Schalter auf, mit welchem in einem funktionsgemäßen Einbauzustand des Lenksäulenmoduls in einem Fahrzeug eine Dauerspeicherung auslösbar ist, insbesondere eine Dauerspeicherung der von der Unfalldatenspeichervorrichtung erfassten und gespeicherten Daten.

Der Schalter ist dabei bevorzugt durch ein Bedienelement betätigbar, welches besonders bevorzugt im Lenksäulenmodul integriert ist. Selbstverständlich kann das Bedienelement aber auch außerhalb des Lenksäulenmoduls angeordnet sein und lediglich mit dem Schalter derart gekoppelt sein, dass eine Betätigung des Bedienelementes eine Schalterbetätigung auslöst.

Um den Fahrer über einen Zustand der Unfalldatenspeichervorrichtung zu informieren, insbesondere um den Fahrer darauf hinzuweisen, dass eine Speicherkapazität ausgeschöpft ist, um den Fahrer aufzufordern, die als Daten gespeicherten Signale auszulesen und/oder die Speicherkapazität durch Löschen der gespeicherten Daten wieder freizugeben, weist das Lenksäulenmodul oder die Unfalldatenspeichervorrichtung bevorzugt entsprechende Mittel dazu auf, insbesondere eine entsprechende Anzeigeeinrichtung oder ist mit einer Anzeigeeinrichtung entsprechend koppelbar.

Das Lenksäulenmodul oder die Unfalldatenspeichervorrichtung weisen bevorzugt einen von einem Fahrer manuell betätigbaren Schalter auf, mit welchem die in der Unfalldatenspeichervorrichtung gespeicherte Daten gelöscht werden können, vorzugsweise vollständig, wobei diese Funktionalität bei Bedarf gesperrt werden kann. Dieser Schalter ist bevorzugt durch ein Bedienelement betätigbar, wobei das Bedienelement besonders bevorzugt im Lenksäulenmodul integriert ist. Das Bedienelement kann aber auch außerhalb des Lenksäulenmoduls angeordnet sein.

Weitere Merkmale der Erfindung ergeben sich aus den Figuren und der Figurenbeschreibung. Alle vorstehend in der Beschreibung im Zusammenhang mit der Anordnung genannten Merkmale und Merkmalskombinationen sowie die nachfolgend in der Figurenbeschreibung genannten und/oder in den Figuren alleine gezeigten Merkmale und Merkmalskombinationen gelten nicht nur für die Unfalldatenspeichervorrichtung, sondern auch für das beschriebene Lenksäulenmodul und sind jeweils nicht nur in den jeweils beschriebenen Kombinationen, sondern auch in anderen, technisch ausführbaren Kombinationen bzw. in Alleinstellung verwendbar.

Die Erfindung wird nun anhand eines bevorzugten Ausführungsbeispiels sowie unter Bezugnahme auf die beigefügte Zeichnung näher erläutert.

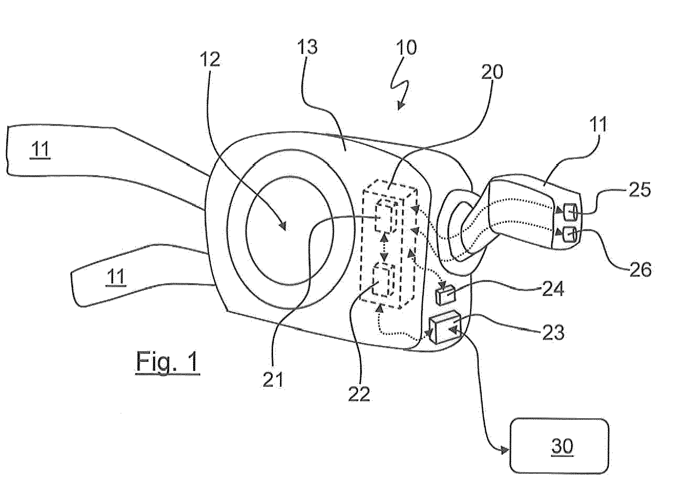

- Fig. 1: zeigt schematisch ein Ausführungsbeispiel eines erfindungsgemäßen Lenksäulenmoduls mit einer erfindungsgemäß integrierten Unfalldatenspeichervorrichtung in perspektivischer Darstellung.

Das in Fig. 1 dargestellte Ausführungsbeispiels eines erfindungsgemäßen Lenksäulenmodul 10 umfasst in diesem Fall ein Gehäuse 13 und drei Lenkstockhebel 11 als Betätigungs- zw. Bedienelemente sowie eine Ausnehmung 12 zum Aufstecken des Lenksäulenmoduls 10 auf eine hier nicht dargestellte Lenksäule eines Fahrzeugs. In das Lenksäulenmodul 10 ist eine erfindungsgemäße Unfalldatenspeichervorrichtung 20 integriert, welche innerhalb des Gehäuses 13 angeordnet ist.

Zur Speicherung der erkannten Ereignisse, wie beispielsweise Unfällen oder heiklen bzw. gefährlichen Fahrsituationen, d.h. zur Speicherung von durch eine Analyse der erfassten Daten ermittelten Ergebnisdaten, weist die erfindungsgemäße Unfalldatenspeichervorrichtung 20 ein Hauptspeichermodul 21 auf und zur Speicherung der zugehörigen Basis- bzw. "Rohdaten" ein Nebenspeichermodul 22 als Verlaufsspeicher. Das Hauptspeichermodul 21 wird dabei durch einen Hauptspeicher des Lenksäulenmodul gebildet und ist zur Speicherung von bis zu 10 Ereignissen ausgebildet. Das Nebenspeichermodul 22 ist ein zusätzlich in das Lenksäulenmodul 10 eingebrachter Speicherbaustein. Mit dem Nebenspeichermodul 22 können die Verlaufsdaten seit den letzten 10 Zündungswechsein erfasst werden.

Mit Hilfe eines in den rechten Lenkstockhebel 11 integrierten Bedienelementes 25 in Form eines Drucktasters, kann eine Betätigung eines Schalters in der Unfalldatenspeichervorrichtung 20 ausgelöst werden, welcher eine Dauerspeicherung bewirkt. D.h. mit Hilfe dieses Bedienelementes 25 kann eine Dauerspeicherung ausgelöst werden, ohne dass ein relevantes, ein automatisch eine Dauerspeicherung auslösendes Ereignis, wie beispielsweise ein Unfall erkannt werden muss.

Mit dem Bedienelement 26 kann die Betätigung eines Schalters in der Unfalldatenspeichervorrichtung 20 ausgelöst werden, welcher eine vollständige Löschung der Daten, auch nach einem Unfall oder dergleichen, bewirkt. Dadurch kann der Fahrer in einem für ihn nachteiligen Fall eine Selbstbelastung vermeiden.

Die Unfalldatenspeichervorrichtung 20 kann sowohl intern im Lenksäulenmodul 10 erzeugte und erfasste Daten speichern, wie beispielsweise Betätigungen der Lenkstockhebel 11 sowie einen Lenkwinkel und eine Lenkwinkelgeschwindigkeit, als auch extern erzeugte und erfasste Signale, welche auf einem Fahrzeug-Bus übertragen werden, denn die Unfalldatenspeichervorrichtung ist über die Schnittstelle 23 des Lenksäulenmoduls 10 mit einem Fahrzeug-Bussystem koppelbar. Dabei handelt es sich in diesem Fall um eine FlexRay-Schnittstelle 23.

Über die FlexRay-Schnittstelle 23 kann das erfindungsgemäße Lenksäulenmodul 10 mit der erfindungsgemäß integrierten Unfalldatenspeichervorrichtung, wie in Fig. 1 schematisch angedeutet, ferner mit einer Anzeigeeinrichtung 30 gekoppelt werden. Mit Hilfe entsprechender Mittel in der Unfalldatenspeichervorrichtung 20 ist es somit möglich, einem Fahrer Informationen über den Zustand der Unfalldatenspeichervorrichtung 20 anzuzeigen, beispielsweise ob sie aktiviert oder deaktiviert ist, wie viel Speicherkapazität noch zur Verfügung steht oder ob Daten ausgelesen und gelöscht werden müssen, um weitere Daten zu speichern.

Zur Diagnose der Unfalldatenspeichervorrichtung 20 kann die Unfalldatenspeichervorrichtung 20 ferner über die OBD-Diagnoseschnittstelle 24 (On-Board-Diagnose-Schnittstelle) des Lenksäulenmodul 10 mit einem Diagnosegerät gekoppelt werden.

Selbstverständlich ist eine Vielzahl an konstruktiven Abwandlungen möglich, ohne den Inhalt der Patentansprüche zu verlassen.

## Patentansprüche

**1.** Unfalldatenspeichervorrichtung (20) für ein Fahrzeug, wobei die Unfalldatenspeichervorrichtung (20) zur Erfassung von Signalen und/oder zum Empfang von über eine Schnittstelle (23, 24) übermittelten Signalen ausgebildet ist und Mittel zur Speicherung (21, 22) der erfassten und/oder empfangenen Signale und Mittel zur Analyse der erfassten und/oder empfangenen Signale aufweist, um eine Unfallsituation zu detektieren,
**dadurch gekennzeichnet, dass** die Unfalldatenspeichervorrichtung (20) zur Integration in ein Lenksäulenmodul (10) ausgebildet ist.

**2.** Unfalldatenspeichervorrichtung (20) nach Anspruch 1, **dadurch gekennzeichnet, dass** die Unfalldatenspeichervorrichtung (20) zur Speicherung der erfassten und/oder empfangenen Signale wenigstens ein Hauptspeichermodul (21) aufweist und vorzugsweise zusätzlich wenigstens einen Nebenspeichermodul (22).

**3.** Unfalldatenspeichervorrichtung (20) nach Anspruch 1 oder 2, **dadurch gekennzeichnet, dass** die Unfalldatenspeichervorrichtung (20) zur Erfassung und/oder Speicherung und/oder Analyse von intern im Lenksäulenmodul (10) erzeugten Signalen ausgebildet ist.

**3.** Unfalldatenspeichervorrichtung (20) nach einem der vorgenannten Ansprüche,
**dadurch gekennzeichnet, dass** die Unfalldatenspeichervorrichtung (20) zur Erfassung und/oder Speicherung und/oder Analyse von extern außerhalb des Lenksäulenmodul (10) erzeugten Signalen ausgebildet ist, wobei die Unfalldatenspeichervorrichtung (20)über eine Schnittstelle (23) mit einem Fahrzeug-Bussystem koppelbar ist.

**4.** Unfalldatenspeichervorrichtung (20) nach einem der vorgenannten Ansprüche,
**dadurch gekennzeichnet, dass** die Unfalldatenspeichervorrichtung (20)über eine Diagnoseschnittstelle (24) mit einem Diagnosegerät koppelbar ist.

**6.** Unfalldatenspeichervorrichtung (20) nach einem der vorgenannten Ansprüche,
**dadurch gekennzeichnet, dass** die Unfalldatenspeichervorrichtung (20) einen von einem Fahrer manuell betätigbaren Schalter aufweist, mit welchem in einem funktionsgemäßen Einbauzustand der Unfalldatenspeichervorrichtung (20) in einem Fahrzeug eine Dauerspeicherung auslösbar ist.

**7.** Unfalldatenspeichervorrichtung (20) nach einem der vorgenannten Ansprüche,
**dadurch gekennzeichnet, dass** die Unfalldatenspeichervorrichtung (20) Mittel aufweist, um den Fahrer über einen Zustand der Unfalldatenspeichervorrichtung (20) zu informieren, insbesondere um den Fahrer darauf hinzuweisen, dass eine Speicherkapazität ausgeschöpft ist, um den Fahrer aufzufordern, die als Daten gespeicherten Signale auszulesen und/oder die Speicherkapazität durch Löschen der gespeicherten Daten wieder freizugeben.

**8.** Unfalldatenspeichervorrichtung (20)nach einem der vorgenannten Ansprüche,
**dadurch gekennzeichnet, dass** die Unfalldatenspeichervorrichtung (20) einen von einem Fahrer manuell betätigbaren Schalter aufweist, mit welchem die in der Unfalldatenspeichervorrichtung (20) gespeicherte Daten löschbar sind, vorzugsweise vollständig löschbar.

**9.** Lenksäulenmodul (10) für ein Fahrzeug,
**dadurch gekennzeichnet, dass** das Lenksäulenmodul (10) eine Unfalldatenspeichervorrichtung (20) aufweist, insbesondere eine Unfalldatenspeichervorrichtung (20) nach einem der Ansprüche 1 bis 8.

**10.** Lenksäulenmodul (10) nach Anspruch 9, **dadurch gekennzeichnet, dass** das Lenksäulenmodul (10) Mittel zur Erfassung und/oder Speicherung (21, 22) von Signalen aufweist und diese auch zur Speicherung der erfassten und/oder empfangenen Signale der Unfalldatenspeichervorrichtung (20) dienen, wobei das Lenksäulenmodul (10) dazu vorzugsweise wenigstens ein Hauptspeichermodul (21) aufweist und insbesondere wenigstens ein Hauptspeichermodul (21) und zusätzlich wenigstens ein Nebenspeichermodul (22).

**11.** Lenksäulenmodul (10) nach Anspruch 9 oder 10, **dadurch gekennzeichnet, dass** das Lenksäulenmodul (10) eine Schnittstelle (23) zu einem Fahrzeug-Bussystem aufweist, wobei die Unfalldatenspeichervorrichtung (20) vorzugsweise ebenfalls über diese Schnittstelle (23) mit dem Fahrzeug-Bussystem koppelbar ist.

**12.** Lenksäulenmodul (10) nach einem der Ansprüche 9 bis 11, **dadurch gekennzeichnet, dass** das Lenksäulenmodul (10) eine Diagnoseschnittstelle (24) aufweist, über welche das Lenksäulenmodul (10) mit einem Diagnosegerät koppelbar ist, wobei die Unfalldatenspeichervorrichtung (20) vorzugsweise ebenfalls über diese Diagnoseschnittstelle (24) mit einem Diagnosegerät koppelbar ist.
